# EUROPÄISCHE PATENTSCHRIFT

(11) **EP 3 219 520 B1**
(45) Veröffentlichungstag und Bekanntmachung des Hinweises auf die Patenterteilung: **05.05.2021**
(21) Anmeldenummer: 16200518.5
(22) Anmeldetag: 26.07.2014
(51) Int. Cl.: B60D 1/54, B60D 1/62, B60D 1/24, B60D 1/06

(54) **ANHÄNGEKUPPLUNGSSYSTEM FÜR KRAFTFAHRZEUGE**
TRAILER COUPLING SYSTEM FOR MOTOR VEHICLES
SYSTÈME D'ATTELAGE POUR VÉHICULES AUTOMOBILES

(30) Priorität: 27.07.2013 DE 102013012525
(43) Veröffentlichungstag der Anmeldung: 20.09.2017
(62) Teilanmeldung aus: 14400040.3
(73) Patentinhaber: WESTFALIA - Automotive GmbH, 33378 Rheda-Wiedenbrück (DE)
(72) Erfinder: Angermann, Kay, Dr., 04720 Döbeln (DE); Hetfleisch, Raimund, 33129 Delbrück-Boke (DE)
(74) Vertreter: Patentanwälte Bregenzer und Reule Partnerschaftsgesellschaft mbB

(56) Entgegenhaltungen:
- EP-A1- 1 894 752
- EP-A1- 1 905 617
- WO-A1-2011/053372
- WO-A1-2011/053372
- DE-A1-102004 044 912
- DE-A1-102009 045 290
- DE-A1-102011 009 306
- US-A1- 2004 113 391

## Beschreibung

Die Erfindung betrifft eine Anhängekupplung für ein Kraftfahrzeug, insbesondere für einen Personenkraftwagen, mit einem Lagermodul, gemäß dem Oberbegriff des Anspruchs 1.

Eine derartige Anhängekupplung ist in DE 10 2011 009 306 A1 erläutert.

Anhängekupplungen der eingangs genannten Art sind zwischenzeitlich aus Komfortgründen in großem Umfang verbreitet. Sie werden in der Regel für die direkte Montage an Neufahrzeugen einer vorbestimmten Bauart bereitgestellt, d.h. dass sie optimal an die örtlichen Gegebenheiten des Kraftfahrzeugs, beispielsweise Abstände zwischen Karosserie-Heck und Stoßfänger, Maße des Stoßfängers und dergleichen, angepasst sind. Auch das Bedienkonzept steht von vornherein fest, nämlich beispielsweise dass die Anhängekupplung an sich manuell zu bedienen ist, jedoch über einen Bowdenzug oder dergleichen, beispielsweise vom Kofferraum des Kraftfahrzeugs aus, betätigbar ist.

Für eine Nachrüstung eines Kraftfahrzeugs eines anderen Typs eignet sich jedoch eine solche sozusagen eine Serien-Anhängekupplung darstellende Anhängekupplung nur in Ausnahmefällen.

Es ist daher die Aufgabe der vorliegenden Erfindung, ein verbessertes Konzept zur Herstellung von Anhängekupplungen bereitzustellen, bei dem die Anpassung an unterschiedliche Fahrzeugtypen leichter gelingt.

Zur Lösung der Aufgabe ist eine Anhängekupplung gemäß der technischen Lehre des Anspruchs 1 vorgesehen.

Es ist dabei ein Grundgedanke, dass das Lagermodul, beispielsweise ein Schwenkmodul, im Prinzip immer gleich ist und die daran anzuordnenden Anbauteile, nämlich der Kuppelträger oder der Antrieb oder beide, fahrzeugtypisch auszugestalten. Die relativ komplizierte Mechanik des Lagermoduls kann sozusagen in großer Stückzahl hergestellt werden, während die individuellen Komponenten (Kuppelträger und/oder Antrieb) individuell für das jeweils mit der Anhängekupplung auszustattende Kraftfahrzeug hergestellt und angebaut werden.

Das Lagermodul lagert den Kuppelträger beispielsweise schwenkbar, verschiebbar oder beides, so dass er zwischen der Betriebstellung oder Nichtgebrauchsstellung verstellbar ist.

Beispielsweise können Kuppelträger für unterschiedliche Fahrzeugtypen ausgestaltet sein, d.h. dass beispielsweise der Kuppelträger kürzer oder länger ist, einen anderen Krümmungsbereich hat oder dergleichen, wobei die Kuppelträger-Montageschnittstelle die Montage des Kuppelträgers am Lagermodul ermöglicht.

Auch auf Seiten des Antriebs ist es vorteilhaft, unterschiedliche Varianten bereitzustellen, so zum Beispiel einen manuellen Antrieb oder motorischen Antrieb, wobei an dieser Stelle zu bemerken ist, dass es auch bei diesen Antriebstypen verschiedene Varianten geben kann, zum Beispiel einen Antrieb mit einem Bedienhebel oder einen Drehknauf zur manuellen Betätigung, oder auch elektromotorische Antriebe mit unterschiedlich ausgestalteten Elektromotoren, Überwachungskonzepten, Steuerungskonzepten oder dergleichen mehr.

Die Kuppelträger-Montageschnittstelle und/oder die Antrieb-Montageschnittstelle weist zweckmäßigerweise eine Drehwinkelkodierung auf, so dass der jeweilige Kuppelträger am Lagerelement oder der jeweilige Antrieb an der Lagerbasis nur in einer vorbestimmten Drehwinkelposition an der jeweiligen Montageschnittstelle, montierbar ist. Dadurch wird sichergestellt, dass sich die beiden Komponenten nur so miteinander verbinden lassen, dass die Anhängekupplung dann ordnungsgemäß zusammengebaut ist. Beispielsweise wird auf diesem Wege sichergestellt, dass der Kupplungsarm in der Betriebstellung die richtige Winkelposition in Bezug auf die Fahrzeuglängsachse des Kraftfahrzeugs hat.

Die Drehwinkelkodierung kann beispielsweise einen Vorsprung an der einen Komponente und eine Aufnahme einer anderen Komponente von Lagermodul einerseits und Kuppelträger oder Antrieb andererseits aufweisen. Die Aufnahme und der Vorsprung sind zweckmäßigerweise einstückig mit einem Grundkörper der jeweiligen Komponente, d.h. Kupplungsträger oder Antrieb oder Lagerbasis oder Lagerelement. Somit kann sozusagen bei der Fertigung schon sichergestellt werden, dass die jeweilige Komponente später ausschließlich drehwinkelrichtig an der benachbarten Komponente zu montieren ist.

Die Drehwinkelkodierung kann aber auch beispielsweise Rastvorsprünge und Rastaufnahmen umfassen, die in solchen Winkelabständen und/oder Längsabständen zueinander angeordnet sind, dass sie nur dann ineinander passen bzw. miteinander verrastbar sind, wenn die richtige Drehwinkelposition der zu verbindenden Komponenten (Lagermodul einerseits und Kuppelträger oder Antrieb andererseits) gewährleistet ist.

Aber auch ein ein-eindeutiges Lochbild für eine Verschraubung des Kuppelträgers mit dem Lagerelement und/oder des Antriebs mit dem Lagerelement ist vorteilhaft, Das Lochbild kann beispielsweise eine Anordnung von mehreren Löchern oder Bohrungen an der einen Komponente umfassen, die in einem vorbestimmten Winkelabstand und/oder Längsabstand wie ein Lochbild oder eine Anordnung von Schraubenelementen bei der anderen Komponente von einem Lagerelement einerseits und Antrieb oder Kuppelträger andererseits angeordnet sind. Das Lochbild kann aber auch Bohrungen oder Löcher mit unterschiedlichen Durchmessern oder unterschiedlichen Geometrien umfassen. Ferner ist es möglich, dass beispielsweise Bohrungen oder Löcher mit Stufen vorgesehen sind, wobei eine zur Öffnung hinten oben angeordnete Stufe eines Loches oder einer Bohrung eine vorbestimmte Innenumfangsgeometrie aufweisen kann, in die ein Steckvorsprung nahe bei einem Schraubbolzen, beispielsweise an dessen Fußbereich, nur dann hineinpasst, wenn er eine korrespondierende Außenumfangsgeometrie hat, beispielsweise eine quadratische, dreieckige oder dergleichen andere Außenumfangsgeometrie, zu der passend die Innenumfangsgeometrie ausgestaltet ist.

Eine bevorzugte Ausführungsform der Erfindung sieht vor, dass der Antrieb einen manuellen Antrieb umfasst, der von einem Bediener manuell betätigbar ist. Es ist auch möglich, dass der Antrieb einen motorischen Antrieb bildet oder einen motorischen Antrieb aufweist. Bevorzugt ist ein elektromotorisches Konzept, das heißt, dass der Antrieb mindestens einen Elektromotor aufweist.

Der manuelle Antrieb kann in unterschiedlichen Ausführungsformen vorgesehen sein, beispielsweise mit einem Schwenkhebel, einen Drehknauf oder dergleichen. Es können auch unterschiedliche Arten von manuellem Antrieb vorgesehen sein, beispielsweise ein in einem Außenbereich des Kraftfahrzeugs anzuordnender manueller Antrieb oder einen Antrieb, der nur im Innenraum des Kraftfahrzeugs montiert werden darf, zum Beispiel im Gepäckabteil.

Der Antrieb kann ein reiner Löseantrieb sein, d.h. dass er beispielsweise eine Verriegelung ausschließlich löst, jedoch nicht herstellen kann.

Der Antrieb kann aber auch eine Federkomponente umfassen, d.h. eine Federeinrichtung oder dergleichen, die beispielsweise ein Abtriebselement des Antriebs in Richtung einer Verriegelungsstellung oder Schließstellung betätigt, in welcher die Anhängekupplung ortsfest festgelegt ist, d.h. dass beispielsweise in der Betriebstellung der Kuppelträger ortsfest festgelegt ist. In Richtung der Lösestellung, in der eine Verriegelungseinrichtung der Anhängekupplung freigegeben ist, ist dann beispielsweise ein Motor oder eine manuelle Betätigungskomponente vorgesehen, beispielsweise ein Bedienhebel.

Der Antrieb kann aber auch ein Antrieb sein, mit dem der Kuppelträger zwischen der Betriebstellung und der Nichtgebrauchstellung verstellbar ist. Auch hier ist es vorteilhaft, unterschiedliche Antriebe vorzusehen, beispielsweise mit unterschiedlicher Betätigungskraft.

Ferner ist es möglich, dass mehrere Antriebe und dementsprechend mehrere Antrieb-Montageschnittstellen bei dem Lagermodul vorgesehen sind. Beispielsweise kann ein Antrieb zur Verstellung des Kuppelträgers zwischen der Nichtgebrauchsstellung und der Betriebstellung vorgesehen sein, während ein anderer Antrieb und somit eine weitere Antrieb-Montageschnittstelle dafür vorgesehen sind, eine Verriegelung der Anhängekupplung zu lösen, zu schließen oder beides.

Ferner ist es möglich, dass nur ein einziger Antrieb vorgesehen ist, wobei dieser durchaus mehrere Motoren umfassen kann. Wenn nur ein einziger Antrieb vorgesehen ist, ist es vorteilhaft, wenn dieser sowohl die Verriegelung betätigen kann, z.B. entriegeln, verriegeln oder beides kann, als auch den Kuppelträger zwischen der Betriebstellung und der Arbeitsstellung verstellen kann.

Der Antrieb kann auch Antriebe mit unterschiedlichen Sicherungseinrichtungen umfassen. Beispielsweise kann ein Antrieb vorgesehen sein, der ohne zusätzliche Sicherung auskommt. Ein anderer Antrieb kann beispielsweise mit einer zusätzlichen Sicherungskomponente versehen sein, die ein Lösen beispielsweise einer Verriegelungseinrichtung der Anhängekupplung verhindert, es sei denn, das Betätigungselement des Antriebs oder der Abtrieb des Antriebs wird aktiv von beispielsweise einem Elektromotor, einem manuellen Bedienelement oder dergleichen, in Richtung der Lösestellung betätigt.

Eine solche Sicherungseinrichtung kann in den Antrieb integriert sein oder davon abseits sozusagen als ein Sicherungsmodul vorgesehen sein. Bevorzugt ist es, wenn ein derartiges Sicherungsmodul wahlweise zwischen einem Abtrieb des Antriebs und die Antrieb-Montageschnittstelle des Lagermoduls geschaltet werden kann, wenn Bedarf besteht.

Der Antrieb umfasst also beispielsweise eine Sicherungseinrichtung, die zwischen einen Abtrieb eines Antriebsmoduls und die Antrieb-Montageschnittstelle geschaltet ist, wobei diese Sicherungseinrichtung eine Rückwirkung eines Antriebs Element der Verriegelungseinrichtung der Anhängekupplung in Richtung der Lösestellung blockiert und bei einer Betätigung des Abtriebs in Richtung der Lösestellung eine Verstellung des Antriebs der Verriegelungseinrichtung in Richtung der Lösestellung freigibt. Mit anderen Worten ist also die Verriegelungseinrichtung nur aktiv dadurch zu entriegeln, dass das Betätigungsmittel betätigt wird. Eine Rückwirkung, wie beispielsweise beim Fahrbetrieb auf den Antrieb entstehen kann, wird von der Sicherungseinrichtung blockiert.

Diese Sicherungseinrichtung ist vorzugsweise in der Art eines Fernbetätigungselements ausgestaltet oder zwischen ein Fernbetätigungselement und das eigentliche Antriebsmodul geschaltet, was nachfolgend noch deutlich wird.

Der Antrieb umfasst zweckmäßigerweise ein Fernbetätigungselement, insbesondere einen Bowdenzug, Seilzug, ein Übertragungsgetriebe oder dergleichen, das an einem ersten Längsendbereich eine Montageschnittstelle zur Montage an der Antrieb-Montageschnittstelle und an einem zweiten Längsendbereich eine Abtrieb-Montageschnittstelle zur Montage an einem Abtrieb des Antriebs aufweist. Mit anderen Worten kann also dieses Fernbetätigungselement zwischen beispielsweise das vorgenannte Antriebsmodul und die Antrieb-Montageschnittstelle des Lagermoduls geschaltet werden. Die Fernbetätigungseinrichtung oder das Fernbetätigungselement kann beispielsweise die vorgenannte Sicherungseinrichtung umfassen. Es ist aber auch möglich, dass die Sicherungseinrichtung und das Fernbetätigungselement voneinander unabhängige Komponenten sind, die bei Bedarf miteinander verbindbar sind und sozusagen in die Anhängekupplung integriert werden können.

Die Abtrieb-Montageschnittstelle ist zweckmäßigerweise baugleich mit der Antrieb-Montageschnittstelle des Lagermoduls. Dies ermöglicht es, das Fernbetätigungselement bei Bedarf ohne Modifikation anderer Komponenten der Anhängekupplung einzubauen oder nicht.

Es versteht sich, dass diese Ausführungsform auch bei der Sicherungseinrichtung vorteilhaft ist, d.h. dass diese beispielsweise an ihren jeweiligen Längsendbereichen eine Abtrieb-Montageschnittstelle und eine Montageschnittstelle zur Montage an der Antrieb-Montageschnittstelle des Lagermoduls aufweist.

Mindestens eine der Montageschnittstellen, d.h. also beispielsweise die Antrieb-Montageschnittstelle oder die Kuppelträger-Montageschnittstelle, ist erfindungsgemäß als eine Steck-Montageschnittstelle ausgestaltet, die eine Steckmontage der aneinander zu befestigenden Komponenten ermöglicht. So kann beispielsweise auf diesem Wege der Kuppelträger an die Kuppelträger-Montageschnittstelle angesteckt werden. Dabei ist es möglich, dass der Steckvorsprung beispielsweise einen Bestandteil der Kuppelträger-Montageschnittstelle bildet, während am anderen Bauteil, dem Kuppelträger, eine Steckaufnahme vorgesehen ist oder umgekehrt. Es ist auch vorteilhaft, wenn beispielsweise Komponenten des Antriebs oder der Antrieb als solcher anhand einer Steckmontage an der Antrieb-Montageschnittstelle montierbar ist. So ist es auch möglich, dass die vorgenannte Sicherungseinrichtung oder das Fernbetätigungselement aneinander oder mit dem Antriebsmodul oder dem Lagermodul anhand einer vorteilhaften Steckmontage miteinander zu verbinden sind, also beispielsweise jeweils eine Komponente der Steck-Montageschnittstelle aufweisen (Steckaufnahme, Steckvorsprung oder beides).

Die Steck-Montageschnittstelle weist zweckmäßigerweise eine Verriegelung auf, beispielsweise eine nicht mehr zerstörungsfrei lösbare Verriegelung oder nur mit einem Werkzeug lösbare Verriegelung, welche die aneinander gesteckten Komponenten miteinander verriegelt. Die Verriegelung kann aber auch eine werkzeuglos lösbare Verriegelung umfassen, wobei es in diesem Fall vorteilhaft ist, wenn zusätzliche Sicherungen vorgesehen sind, beispielsweise Rasteinrichtungen oder dergleichen, um ein zufälliges oder unbeabsichtigtes Lösen der Steckverbindung zu verhindern.

Mindestens eine Montageschnittstelle weist zur Sicherung der Steckverbindung erfindungsgemäß eine Halteklammer, zweckmäßigerweise eine Klinke oder dergleichen auf. Bevorzugt ist beispielsweise eine zweiarmige Klammer, die in die eine Komponente der Steckverbindung eingesteckt wird, diese durchdringt und dann in eine Vertiefung, beispielsweise eine Nut, an der anderen anhand der Steckverbindung montierten Komponente eingreift.

Mindestens eine Montageschnittstelle ist zweckmäßigerweise als eine Rast-Montageschnittstelle ausgestaltet oder weist eine Verrastung auf, bei der ein Rastelement der einen zu verrastenden Komponente in eine Rastaufnahme der anderen zu verrastenden Komponente der Montageschnittstelle einrastet. Beispielsweise können Rastarme, Rastklinken oder dergleichen vorgesehen sein.

Auch bei dem am Querträger zu befestigenden Träger für das Lagermodul ist es möglich, dass dieser unterschiedliche Ausführungsformen hat. Somit ist also das modulare Konzept sozusagen bis zu dem Träger, an dem das Lagerelement angeordnet ist, durchexerziert. Der Träger umfasst beispielsweise einen Träger eines ersten Typs und einen Träger eines zweiten Typs, wobei sich die Träger des ersten und des zweiten Typs in mindestens einer Eigenschaft voneinander unterscheiden. Eine solche Eigenschaft ist beispielsweise die unterschiedliche Geometrie, mechanische Belastbarkeit oder dergleichen eines jeweiligen Trägers. Anhand des Trägers ist auch eine Anpassung an beispielsweise eine Kontur eines Querträgers, der sich hinten am Heck des Kraftfahrzeugs im montierten Zustand erstreckt, ohne weiteres möglich. Somit muss also nicht das Lagerelement einen Querträger angepasst werden, sondern es wird ein geeigneter Träger verwendet, der das jeweilige sozusagen genormte oder in großer Serie hergestellte Lagerelemente jeweils trägt.

Der Kuppelträger ist beispielsweise in der Gestalt eines Kupplungsarmes ausgestaltet.

Bei dem Kuppelträger sind unterschiedliche Varianten möglich, so dass beispielsweise der Kuppelträger des ersten Typs eine Geometrie hat, die der Kuppelträger des zweiten Typs nicht hat. So können beispielsweise bei dem Kuppelträger des ersten Typs mehrere aufeinanderfolgende Krümmungen vorgesehen sein, während der Kuppelträger des zweiten Typs eine durchgehende, gleichförmige Krümmung hat, zum Beispiel eine U-Form.

Bei dem Kuppelträger ist es auch möglich, dass Varianten mit unterschiedlicher mechanischer Belastbarkeit vorgesehen sind; beispielsweise im Querschnitt etwas dickere oder im Querschnitt etwas schwächere Kuppelträger. Weiterhin ist es möglich, dass an dem Kuppelträger unterschiedliche Kuppelelemente vorgesehen sind, beispielsweise eine Kupplungskugel für eine typische Zugkugelkupplung, während für einen Lastenträger eine andere Geometrie, beispielsweise eine Steckaufnahme, vorteilhaft als Funktionselement oder Kuppelelement vorgesehen ist.

Neben der Drehwinkelkodierung oder zu deren Ergänzung ist es vorteilhaft, wenn die Kuppelträger-Montageschnittstelle und/oder die Antrieb-Montageschnittstelle zusätzlich noch eine Montagekodierung aufweist oder als Drehwinkelkodierung eine Montagekodierung hat, die verhindert, dass sozusagen falsche Komponenten miteinander verbunden werden. Anhand der Montagekodierung ist es beispielsweise möglich, dass nur mit dem Lagermodul jeweils kompatible Kuppelträger oder Antriebe an der jeweiligen Montageschnittstelle des Lagermoduls montierbar sind. Wenn also beispielsweise ein Lagermodul nicht dafür geeignet ist, eine besonders belastbare Kugelstange als Kuppelträger zu tragen, weil beispielsweise die Mechanik des Lagermoduls zu wenig belastbar ist, kann dies durch die Montagekodierung verhindert werden. Wenn jedoch der Kuppelträger zu dem Lagermodul passt, ist der Kuppelträger am Lagermodul ohne weiteres montierbar, d.h. die Montagekodierung steht dieser Montage nicht im Wege.

Bei dem Lagermodul ist es ebenfalls möglich, dass unterschiedliche Varianten bestehen. Beispielsweise umfasst das Lagermodul ein Lagermoduls eines ersten Typs und das Baukastensystem sieht weiterhin vor, dass ein Lagermodul mindestens eines zweiten Typs vorgesehen ist. Bei den Lagermodulen ist es allerdings vorteilhaft, wenn sie eine identische oder baugleiche Kuppelträger-Montageschnittstelle und/oder eine identische oder baugleiche Antrieb-Montageschnittstelle aufweisen, so dass an den unterschiedlichen Lagermodulen jeweils dieselben Komponenten von Antrieb oder Kuppelträger montierbar sind.

Der Träger ist zweckmäßigerweise zur Montage an einem Querträger eines Trägersystems der Anhängekupplung ausgestaltet, wobei das Baukastensystem vorzugsweise einen Querträger eines ersten Typs und eines von dem Querträgers ersten Typs sich in mindestens einer Eigenschaft unterscheidenden Querträger eines zweiten Typs umfasst. Beispielsweise sind die Querträger, die sich bei Gebrauch bzw. im montierten Zustand am Heck, insbesondere am Karosserie-Heck des Kraftfahrzeugs quer zur Fahrzeuglängsrichtung erstrecken, unterschiedlich belastbar, weisen unterschiedliche Geometrien auf oder dergleichen.

Nachfolgend werden Ausführungsbeispiel der Erfindung anhand der Zeichnung erläutert. Es zeigen:
- Figur 1: eine Übersichtsdarstellung zur Veranschaulichung des Baukastensystems gemäß der Erfindung,
- Figur 2: eine Anhängekupplung gemäß der Erfindung in Zusammenschau mit zwei unterschiedlichen Antrieben,
- Figur 3: eine erste Variante eines Befestigungskonzepts für eine Montageschnittstelle mit einer Steckmontage des Systems gemäß Figur 1 und 2,
- Figur 4: eine zweite Variante eines Befestigungskonzepts für eine Montageschnittstelle mit einer Steckmontage, von dem in
- Figur 5: ein Längsquerschnitt im gesteckten Zustand dargestellt ist,
- Figur 6: die Anhängekupplung gemäß Figur 1 in einer Schrägansicht, jedoch mit einem gemäß einem alternativen Montagekonzept mit einer durch eine Verschraubung montierten Fernbetätigungselement,
- Figur 7: die Anhängekupplung gemäß der Figuren 1, 2 bei der Montage eines Kuppelträgers eines ersten Typs,
- Figur 8: die Anhängekupplung gemäß Figuren 1, 2 bei der Montage an einem Träger,
- Figur 9: die Anhängekupplung gemäß Figur 8 im montierten Zustand, jedoch schräg (mit Blickrichtung auf das Heck eines Kraftfahrzeugs),
- Figur 10: einen alternativen Träger für die Anhängekupplung gemäß Figuren 8 und 9,
- Figur 11: ein Lagerelement der Anhängerkupplung der vorstehenden Figuren in Zusammenschau mit dem Kuppelträger mit einer Drehwinkelkodierung,
- Figur 12: eine Variante der Anordnung gemäß Figur 11, wobei eine andere Drehwinkelkodierung vorgesehen ist,
- Figur 13: ein Lagerelement mit einem Kuppelträger mit einer alternativen Kuppelträger-Montageschnittstelle,
- Figur 14: einen Querschnitt durch die Anordnung gemäß Figur 13, wobei der Kuppelträger am Lagerelement montiert ist, und

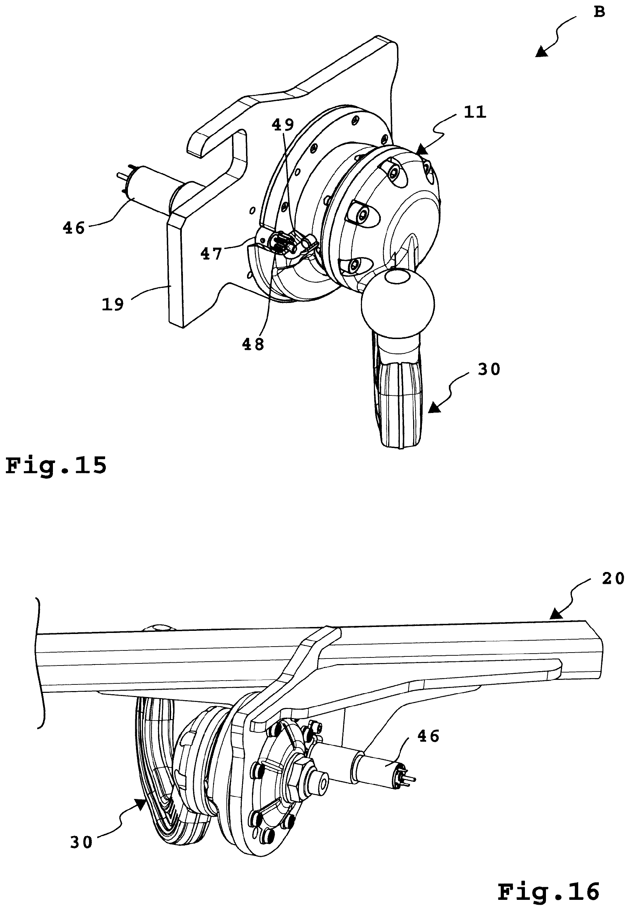

- Figur 15: die Anhängekupplung gemäß der Figuren 1 bis 12 mit einem elektrischen Antrieb von schräg vorn,
- Figur 16: die Anordnung gemäß Figur 15, jedoch von schräg hinten,
- Figur 17: ein Fernbetätigungselement, das anhand einer dritten Variante eines Befestigungskonzepts mit einer Verrastung mit einer in
- Figur 18: dargestellten Komponente, beispielsweise dem Lagermodul, verbindbar ist,
- Figur 19: einen Längsschnitt durch die Anordnung gemäß Figur 18 in gestecktem, verrastetem Zustand, etwa entsprechend einer Schnittlinie A-A in Figur 17, und
- Figur 20: einen Querschnitt durch eine Sicherungseinrichtung des Baukastensystems gemäß Figur 1.

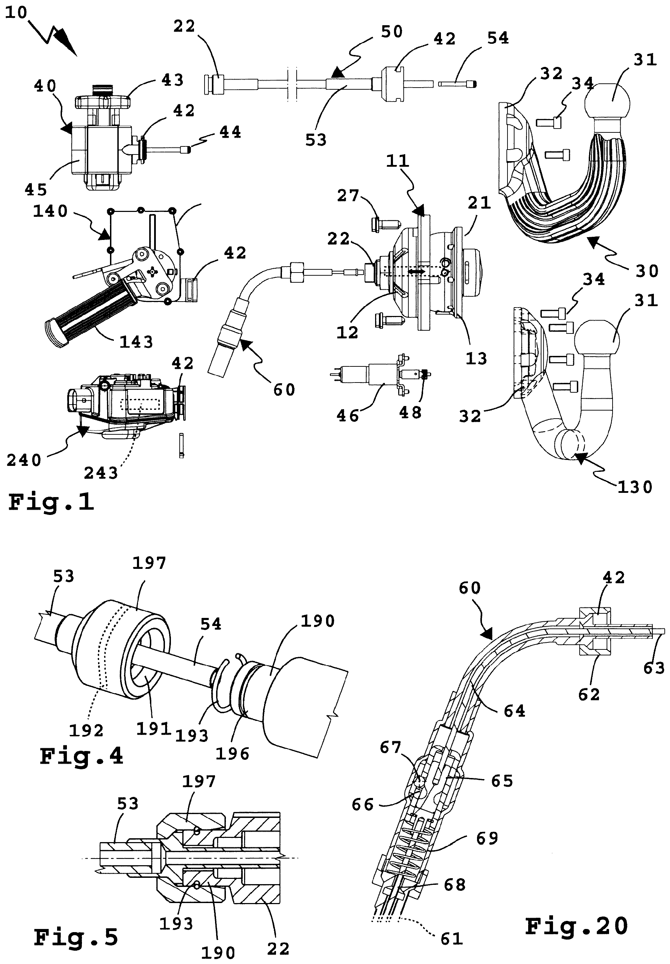

Ein in Figur 1 dargestelltes Baukastensystem 10 umfasst ein Lagermodul 11, das eine Lagerbasis 12 sowie einen daran beweglich, beispielsweise schwenkbeweglich, gelagertes Lagerelement 13. In einem Innenraum der Lagerbasis 12 befindet sich eine Verriegelungseinrichtung 14, wie beispielsweise Verriegelungselemente 15, insbesondere Kugeln, Stifte oder dergleichen oder andere Formschlusselemente umfasst, die in entsprechende Verriegelungsaufnahmen 16 eingreifen. Beispielsweise sind die Verriegelungsaufnahmen 16 am Lagerelement 13 vorgesehen, wobei die Verriegelungselemente 15 beweglich an der Lagerbasis gelagert sind, so dass sie in Eingriff oder außer Eingriff mit den Verriegelungsaufnahmen 16 gelangen können. Zur Betätigung der Verriegelungselemente 15 ist ein Betätigungskörper 17 vorgesehen, beispielsweise ein so genannter Sperrbolzen, der in einer Verriegelungsstellung die Verriegelungselemente 15 in die Verriegelungsaufnahmen 16 hinein betätigt. In einer Lösestellung hingegen, gibt er die Verriegelungselemente 15 frei, so dass diese aus den Verriegelungsaufnahmen 16 gelangen können und somit das Lagerelement 13 gegenüber der Lagerbasis 12 beweglich wird.

Von der Lagerbasis 12 steht ein Montageflansch 18 ab, der zur Montage an einem Träger 19 vorgesehen ist.

Der Träger 19 ist beispielsweise an einem Querträger 20, 120 angeordnet, der sich bei Gebrauch der Anhängekupplung, d.h. im montierten Zustand, am Heck des Kraftfahrzeugs befindet und sich dort quer zur Fahrzeuglängsrichtung oder Fahrzeugquerrichtung erstreckt.

Das Lagermodul 11 weist eine Kuppelträger-Montageschnittstelle 21 auf, an der wahlweise ein Kuppelträger 30 oder 130 montierbar ist. Die Kuppelträger 30, 130 unterscheiden sich hinsichtlich ihrer Geometrie voneinander, d.h. sie haben beispielsweise unterschiedlich ausgestalteten Krümmungen oder dergleichen, um eine Anpassung an ein jeweiliges Kraftfahrzeug zu ermöglichen. Am freien Endbereich eines jeweiligen Kuppelträgers 30, 130 befindet sich ein Kuppelelement 31, beispielsweise eine Kupplungskugel, an das ein Anhänger mit seiner Zugkugelkupplung ankuppelbar ist.

Die Verriegelungseinrichtung 14 ist durch einen Antrieb 40, 140, 240 entriegelbar.

Die Antriebe 40, 140, 240 weisen jeweils ein Antriebsmodul 41, 141, 241 auf, an welchem eine Abtrieb-Montageschnittstelle 42 vorgesehen ist. Die Abtrieb-Montageschnittstelle 42 ist jeweils gleich, so dass wahlweise jeder der Antriebe 40, 140, 240 an einer Antrieb-Montageschnittstelle 22 des Lagermoduls 11 befestigbar ist.

Die Antriebsmodule 41, 141 sind jeweils manuell zu betätigen, bilden also manuelle Antriebe, wobei der Antrieb 40 durch einen Drehknauf 43 manuell betätigbar ist, so dass sein Abtrieb 44 jeweils betätigt wird, während der Antrieb 140 einen Schwenkhebel 143 aufweist, um einen dem Abtrieb 44 gleichenden Abtrieb des Antriebsmoduls 141 zu verstellen.

Das Antriebsmodul 241 hingegen ist eine motorisches Antriebsmodul, das einen Elektromotor 243 zur Betätigung eines in der Zeichnung nicht sichtbaren Abtriebs aufweist, der dem Abtrieb 44 gleicht, zu betätigen.

Der Drehknauf 43 ist an einem Gehäuse 45, der Schwenkhebel 143 an einem Gehäuse 145 und der Elektromotor 243 in einem Gehäuse 245 des Antriebsmoduls 41, 141, 241 angeordnet. An jedem der Gehäuse 45, 145, 245 ist die Abtrieb-Montageschnittstelle 42 vorhanden.

Die Antriebsmodule 41, 141, 241 könnten mit ihren Abtrieb-Montageschnittstellen 42 unmittelbar an der Antrieb-Montageschnittstelle 22 montiert werden.

Vorliegend ist vorteilhaft auch eine Art Fernbetätigung vorgesehen. Zwischen der Abtrieb-Montageschnittstelle 42 und der Antrieb-Montageschnittstelle 22 ist nämlich ein Fernbetätigungselement 50 anordenbar, das am einen Längsendbereich 51 die Komponenten der Antrieb-Montageschnittstelle 22 aufweist, also auch ein Antrieb-Schnittstelle 22 hat, während sie am anderen Längsendbereich 52 mit der Abtrieb-Montageschnittstelle 42 identisch ist. Somit kann das Fernbetätigungselement 50 mit dem Längsendbereich 51 an einem der Antriebsmodule 41, 141, 241 montiert werden, während der andere Längsendbereich 52 mit der Abtrieb-Montageschnittstelle 42 an der Antrieb-Montageschnittstelle 22 des Lagermoduls 11 verbunden werden kann. Ein Kraftübertragungselement 53, beispielsweise ein Bowdenzug, überträgt dann die Antriebskraft des Antriebsmoduls 41 141, 241 zu einem Abtrieb 54, also zum Lagermodul 11.

Alternativ oder ergänzend ist es auch möglich, eine Sicherungseinrichtung 60 zwischen einerseits eines der Antriebsmodule 41, 141, 241 und andererseits das Lagermodul 11 zu schalten. Die Sicherungseinrichtung 60 weist beispielsweise an ihrem einen Längsendbereich 61 (nicht dargestellt) die Antrieb-Montageschnittstelle 22 auf, so dass sie an einem der Antriebsmodule 41, 141, 241 befestigbar ist, während am anderen Längsendbereich 62 ähnlich wie beim Fernbetätigungselement 50 die Abtrieb-Montageschnittstelle 42 vorgesehen ist, die zur Montage an der Antrieb-Montageschnittstelle 22 des Lagermoduls 11 geeignet ist.

Ein Abtrieb 63 der Sicherungseinrichtung 60 ist beispielsweise mit den Betätigungskörper 17 der Verriegelungseinrichtung 14 verbindbar und über ein Kraftübertragungselement 64, beispielsweise einen Seilzug, mit einem Betätigungskörper 65 verbunden. Der Betätigungskörper 65 weist Aufnahmen 66 auf, in die Blockierkörper 67 eintauchen können, um eine Bewegung des Betätigungskörpers 65 in Richtung einer Lösestellung zu ermöglichen. Allerdings ist dies nur dann möglich, wenn ein Antriebselement 68, der beispielsweise von einem der Antriebsmodul 41, 141, 241 betätigt wird. Das Antriebselement 68 kann entgegen der Kraft einer.Feder 69 betätigt werden, wobei er den Betätigungskörper 65 in Richtung der Lösestellung betätigt, welcher dann seinerseits den Abtrieb 63 in die Lösestellung erstellt, mithin also auf diesem Wege die Verriegelungseinrichtung 14 entriegelt. Wenn jedoch diese Verriegelungseinrichtung 14 auf die Sicherungseinrichtung 60 rückwirkt, blockieren die Blockierkörper 67 eine Rückwärtsbewegung des Betätigungskörpers 65 in Richtung der Lösestellung.

Die Kuppelträger-Montageschnittstelle umfasst beispielsweise ein Lochbild 23 am Lagerelement 13, das zu einem Lochbild 33 an einem Montagekopf 32 des Kuppelträgers 30 genau passt. Wenn also beispielsweise Schrauben 34 durch Löcher des Lochbilds 33 hindurch gesteckt werden, können sie in die Löcher des Lochbilds 23 eingeschraubt werden. Exemplarisch an einem Loch 35 des Kuppelträgers 30 wird deutlich, dass durch dieses nur dann eine Schraube 34 hindurch gesteckt werden kann, wenn das Loch 35 einem Loch 25 des Lochbilds 23 genau gegenüberliegt. Dadurch ist eine Drehwinkelkodierung geschaffen.

Diese Maßnahme könnte auch ohne weiteres bei der Schraub-Montage des Lagermoduls 11 am Träger 19 vorgesehen sein. Beispielsweise hat der Träger 19 eine Aufnahme 26, insbesondere eine Durchtrittsöffnung, in der das Lagermodul 11 aufgenommen sein kann. Dann ist es möglich, Schrauben 27 durch Löcher 28, die um die Aufnahme 26 herum angeordnet sind, durchzustecken und in korrespondierende Bohrungen oder Schraubaufnahmen 29 an dem Montageflansch 18 des Lagermoduls 11 einzuschrauben.

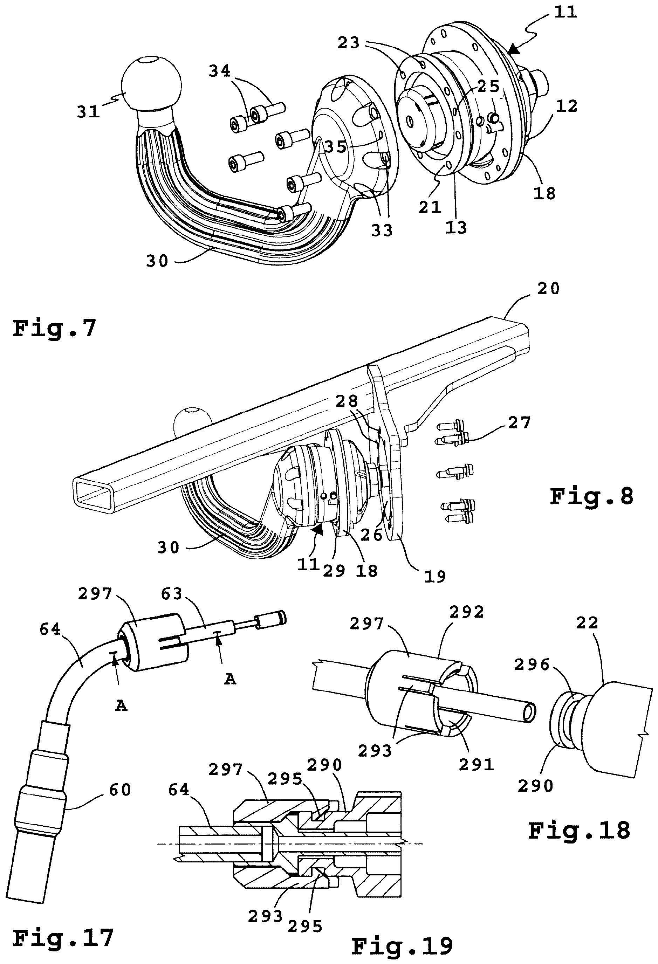

Auch hier kann durch eine geeignete Drehwinkelposition der Löcher 28 der korrespondierenden Schraubaufnahmen des Montageflansches 18 gewährleistet sein, dass die Montage des Lagermoduls 11 am Träger 19 nur in der korrekten Drehwinkelposition möglich ist. Die Anordnung der Löcher 28 und der Schraubaufnahmen 29 bildet ebenfalls eine Drehwinkelkodierung. Man erkennt beispielsweise in Figur 8, dass die Löcher 28 unterschiedliche Drehwinkelabstände zueinander haben, was eine Drehwinkelkodierung darstellt.

Ferner ist es denkbar, dass beispielsweise eines der Löcher des Lochbildes 33 oder des Lochbildes 23 einen anderen Durchmesser oder eine andere Geometrie als die übrigen Löcher aufweist, um auf diesem Wege eine Drehwinkelkodierung zu schaffen.

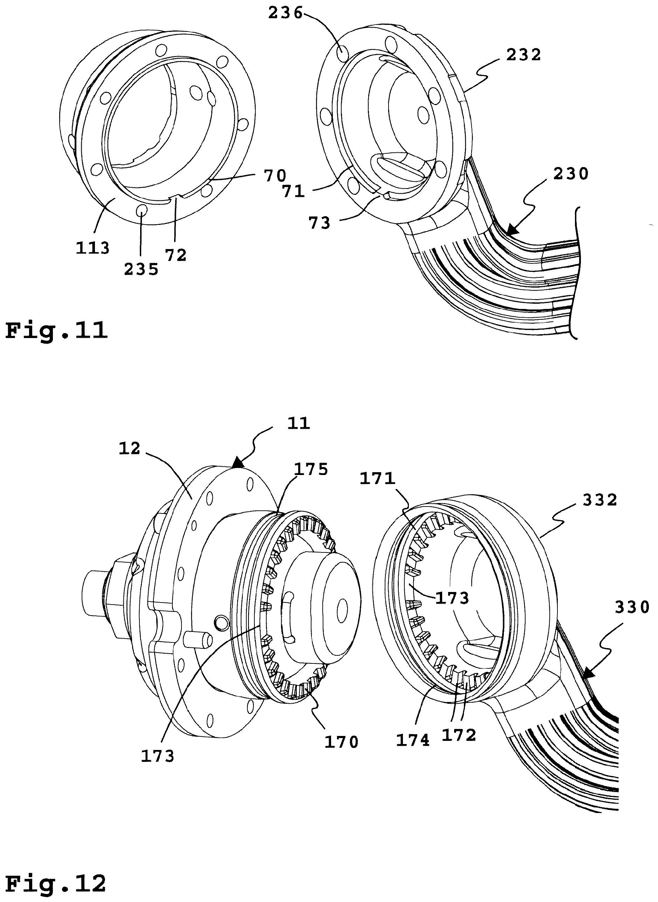

Eine Drehwinkelkodierung bei der Montage des Lagermoduls am Träger oder des Kuppelträgers am Lagermodul kann aber auch durch die Maßnahmen, die in den Figuren 11 und 12 dargestellt sind, vorteilhaft erzielt werden.

Beispielsweise befindet sich an einem Lagerelement 113, das ähnlich wie das Lagerelement 13 an der Lagerbasis 13 schwenkbar gelagert ist, ein Steckvorsprung 70, der in eine Steckaufnahme 71 am Montagekopf 232 eines Kuppelträgers 230 passt. An dem Steckvorsprung 70, der beispielsweise eine ringförmige Gestalt hat, ist eine Ausnehmung 72 vorgesehen, in die ein Vorsprung 73 an der Steckaufnahme 71 genau dann hineinpasst, wenn der Kuppelträger 230 drehwinkelrichtig an dem Lagerelement 113 befestigt ist. Eine zusätzliche Verschraubung ist nur durch einige Löcher 235, 236 am Lagerelement 113 bzw. Kuppelträger 230 angedeutet.

Bei der Anordnung gemäß Figur 12 ist am Lagerelement 213 eine Verzahnung 170 vorgesehen, zu der eine Gegenverzahnung 171 des Kuppelträgers 330 nur dann passt, wenn die beiden Komponenten drehwinkelrichtig aneinander angesetzt sind. Die Verzahnung 170 und die Gegenverzahnung 171 weisen beispielsweise eine Anzahl in einem gleichen Abstand zueinander angeordneter Zähne 172 auf, wobei zwischen jeweils zwei der Zähne 172 ein größerer Abstand 173 vorgesehen ist. Dieser bildet dann die Drehwinkelkodierung.

Auch in diesem Fall kann eine zusätzliche, in der Zeichnung nicht dargestellte Verschraubung vorgesehen sein. Es ist aber auch möglich, dass das Lagerelement 213 und der Kuppelträger 330 miteinander verklebt oder verschweißt werden. Auch eine Sicherung mittels beispielsweise eines Sicherungsrings oder dergleichen ist ohne weiteres denkbar.

Zweckmäßigerweise rastet ein ringförmiger Rastkragen 174 am Montagekopf 232 des Kuppelträgers 230 in eine ebenfalls ringförmige, sich an einem Außenumfang des Lagerelements 13 befindliche ringförmige Rastausnehmung 175 ein. An dieser Verbindungsstelle, aber auch zwischen der Verzahnung 170 und der Gegenverzahnung 172, kann beispielsweise eine Schweißverbindung, Klebeverbindung oder dergleichen vorteilhaft sein.

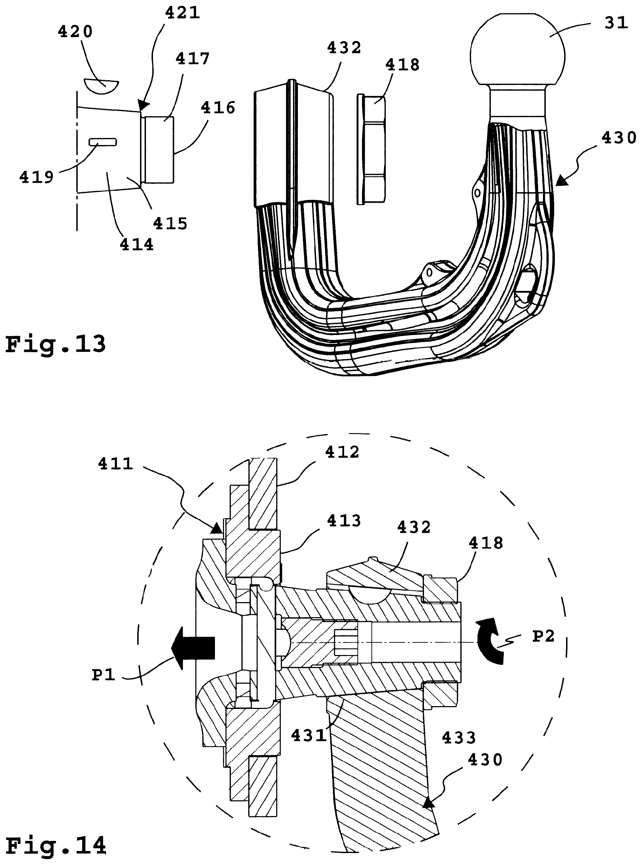

Ein Kuppelträger 430 gemäß Figuren 13, 14, der an einem zu dem Lagermodul 11 alternativen Lagermodul 411 lösbar montierbar ist, ist zur Montage an einer Kuppelträger-Montageschnittstelle 421 ausgestaltet. Die Kuppelträger-Montageschnittstelle 421 könnte auch am Lagermodul 11 vorgesehen sein.

Die Kuppelträger-Montageschnittstelle 421 umfasst beispielsweise einen von einem Lagerelement 413 angeordneten Montagezapfen, nämlich einen Steckvorsprung 414, der in eine Steckaufnahme 431 des Kuppelträgers 430 eingreift. Der Steckvorsprung 414 weist einen konischen Abschnitt 415 auf, der zu einer konischen Innenkontur 433 der Steckaufnahme 431 passt. Am freien Endbereich 416 des Steckvorsprungs 414 ist ein Schraubabschnitt 417 vorgesehen, auf den eine Sicherungsmutter 418 aufschraubbar ist. Die Sicherungsmutter 418 drückt sozusagen den Montagekopf 432 des Kuppelträgers 430 auf den Steckzapfen oder Steckvorsprung 414, wobei die Innenkontur 433 auf den konischen Abschnitt 415 aufgepresst wird.

Am Steckvorsprung 414 ist eine Aufnahme 419 vorgesehen, in die ein nach innen vor die Steckaufnahme 431 vorstehendes Gegenstück 420 oder Passstück, beispielsweise eine sogenannte Passfeder, nur in einer vorbestimmten Drehwinkelposition des Kuppelträgers 430 relativ zum Lagerelement 413 eingreifen kann.

Das Lagerelement 413 ist in Richtung eines Pfeils P1 von einer Lagerbasis 412 des Lagermoduls 411 weg bewegbar, so dass es drehfrei ist und entsprechend einem Pfeil P2 verdreht werden kann. Wenn das Lagerelement 413 entgegen der Richtung des Pfeils P1 betätigt wird, sitzt es an der Lagerbasis 412 fest, ist also verriegelt.

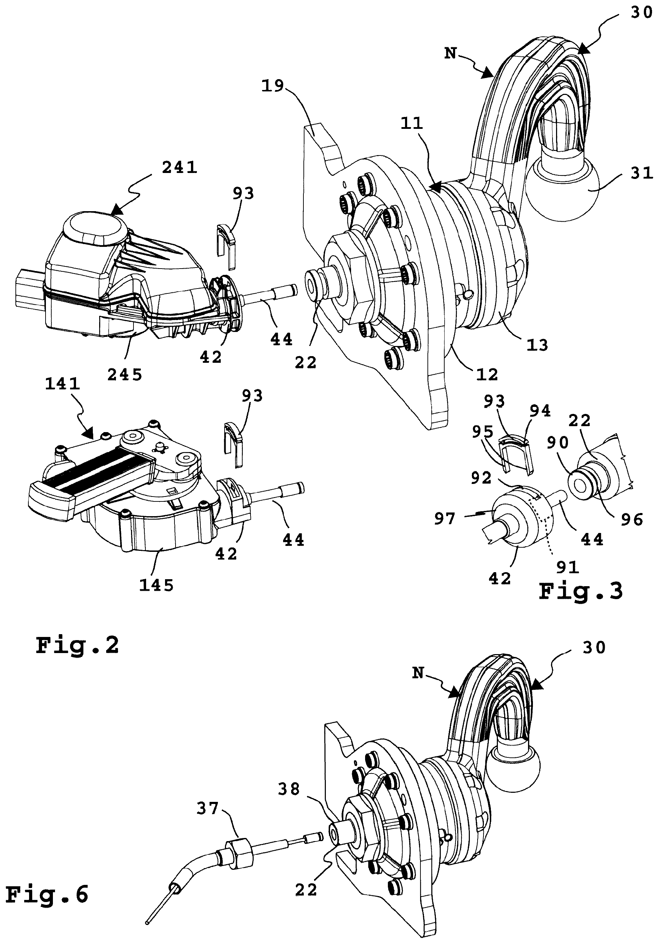

Der Kuppelträger 30 kann an sich manuell zwischen der zum Heck des Kraftfahrzeugs hin verstellten, bei Nichtgebrauch vorgesehenen Nichtgebrauchstellung N (beispielsweise in Figur 2 dargestellt) oder die zum Anhängen eines Anhängers geeignete Betriebstellung B verstellt werden.

Alternativ ist auch ein motorisches Antriebskonzept modular nachrüstbar, beispielsweise anhand eines Antriebsmotors 46, der durch eine Durchtrittsöffnung 47 des Trägers 19 durchsteckbar ist, so dass sein Abtrieb 48 in treibenden Eingriff mit einer Antriebskomponente 49 des Lagermoduls 111 gelangen kann, die mit dem Lagerelement 13 verbunden ist, beispielsweise mit einer Antriebsscheibe. Auch hier ist der modulare Gedanke wiederum realisiert. Es ist beispielsweise möglich, dass statt des Antriebsmotors 46 ein stärkerer Antriebsmotor verwendet wird, der jedoch denselben Abtrieb 48 hat und zweckmäßigerweise auch denselben Außenumfang wie der Antriebsmotor 46, so dass er durch die Durchtrittsöffnung 47 passt. Am Außenumfang des Antriebsmotors 46 und am Innenumfang der Durchtrittsöffnung 47 kann eine Montagekodierung, insbesondere eine Drehwinkelkodierung vorgesehen sein, so dass der Antriebsmotor 46 nur drehwinkelrichtig montierbar ist.

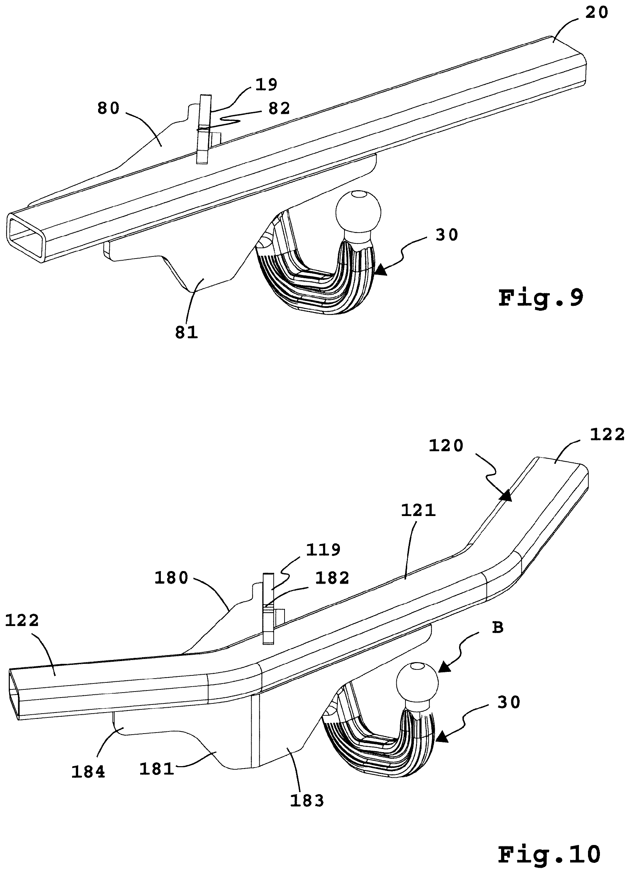

In den Figuren 9 und 10 ist dargestellt, dass anstelle des Trägers 19 auch ein Träger 119 zum Tragen oder Halten des Lagermoduls 11, 111 vorgesehen sein kann. Die Träger 19, 119 sind an eine Geometrie der Querträger 20, 120 jeweils optimal angepasst. Während der Querträger 20 eine durchgehende, gerade Gestalt hat, ist der Querträger 120 nicht geradlinig, sondern weist einen mittleren Abschnitt 121 auf, von dem nach quer außen (in Bezug auf das Kraftfahrzeug gesehen) winkelige Abschnitte 122 abstehen.

Die Querträger 20, 120 weisen beispielsweise einen im wesentlichen rechteckigen Querschnitt mit gerundeten Eckbereichen auf. Selbstverständlich können auch beispielsweise im Querschnitt kreisrunde, elliptische oder ovale Querträgerprofile, auch längs seitlich offene Profile, ohne weiteres vorgesehen sein, wobei die nachfolgend erläuterte optimale Anpassung der Träger 19, 119 auch für derartige andere Querträgerprofile ausgestaltet sein kann.

Als eine Tragkonsole weist der Querträger 20 ein horizontales Tragblech 80 sowie einen vertikales Tragblech 81 auf, wobei an einer Stirnseite oder Tragseite 82 der Träger 19 angeordnet ist.

In Anpassung an die winkelige Kontur des Querträgers 120 hat die Tragkonsole für den Träger 119 ein horizontales Tragblech 180, das in den Winkelbereich zwischen den mittleren Abschnitt 123 und den Abschnitt 122 eingreift. Das vertikale Tragblech 181 weist zwei zueinander winkelige Abschnitte 183, 184 auf. Mithin stützen also die beiden Tragkonsolen den jeweiligen Träger 19, 119 optimal ab.

Die Montageschnittstelle gemäß der Erfindung können unterschiedliche Ausprägungen haben. In einem besonders einfachen Ausführungsbeispiel ist beispielsweise eine Überwurfmutter 37 vorgesehen, die auf einen Schraubabschnitt der Antrieb-Montageschnittstelle 22 aufgeschraubt wird (Figur 6). Es kann selbstverständlich auch die umgekehrte Konfiguration vorgesehen sein, d.h. dass beispielsweise die Überwurfmutter einen Bestandteil der Antrieb-Montageschnittstelle 22 bildet und auf einen Schraubabschnitt des Gegenstücks, nämlich beispielsweise der Abtrieb-Montageschnittstelle 42, aufgeschraubt wird.

Ein bevorzugtes Ausführungsbeispiel der Erfindung ist beispielsweise in Figur 2 und 3 verdeutlicht. Ein Steckvorsprung 90 der Antrieb-Montageschnittstelle 22 ist beispielsweise in eine Steckaufnahme 91 der Abtrieb-Montageschnittstelle einsteckbar und dort verriegelbar, so dass die Steckverbindung nicht mehr ohne weiteres zu lösen ist. An einem die Steckaufnahme 91 aufweisenden Aufnahmekörper 97 ist beispielsweise eine Aufnahme 92 für ein Sicherungselement 93 vorgesehen. Die Aufnahme 92 ist in der Art einer Aufnahmetasche ausgestaltet. Das Sicherungselement 93 weist eine klammerartige Gestalt auf. Das Sicherungselement 93 hat beispielsweise von einem Grundschenkel 94 abstehende Halteschenkel 95. Insgesamt hat das Sicherungselement 93 eine U-förmige Gestalt. Die Halteschenkel 95 greifen in eine Haltevertiefung 96 am Steckvorsprung 90 ein, beispielsweise in eine Umfangsnut. Man erkennt, dass dadurch eine axiale Sicherung bezüglich einer Steckachse, entlang der der Steckvorsprung 90 in die Steckaufnahme 91 einsteckbar ist, realisiert ist.

Bei der Kopplung von beispielsweise Komponenten der Antriebe 40, 140 oder 240 können aber auch andere Steckkonzepte realisiert sein, siehe dazu beispielsweise die Figuren 4 und 5. Ein Steckvorsprung 190, beispielsweise der Antrieb-Montageschnittstelle 22, ist in eine Steckaufnahme 191 eines Aufnahmekörpers 197 einer anderen Montageschnittstelle, nämlich beispielsweise der Abtrieb-Montageschnittstelle 42, einsteckbar, wobei dort eine automatische Verriegelung gegeben ist. Am Innenumfang der Steckaufnahme 191 befindet sich eine Aufnahme 192, z.B. ringförmige Nut, in die ein Sicherungselement 193 in Gestalt eines Splintringes sozusagen einrastet und dort unlösbar verbleibt. Der Splintring bzw. das Sicherungselement 193 ist in einer Haltevertiefung 196 des Steckvorsprungs 190 aufgenommen. Die Haltevertiefung 196 ist beispielsweise eine Ringnut. Der Splintring bzw. das Sicherungselement 193 wird nämlich beim Einstecken des Steckvorsprungs 90 in die Steckaufnahme 91 in die Haltevertiefung 196 hinein komprimiert und schnappt dann sozusagen von selbst wieder nach radial außen in die Aufnahme 92 ein. Dadurch ist in Steckrichtung der Steckverbindung von Steckvorsprung 190 und Steckaufnahme 191 eine axiale Sicherung realisiert.

Eine Rasteinrichtung für eine Erfindung gemäß nutzbare Montageschnittstelle ist in den Figuren 17, 18 und 19 dargestellt. An einem Steckvorsprung 290 beispielsweise der Antrieb-Montageschnittstelle 22 ist eine Rastvertiefung 296 vorgesehen, beispielsweise eine ringförmige Nut (es könnten auch einzelne, beispielsweise kalottenartige, Rastvertiefungen vorgesehen sein), in die Rastnasen 295 von Rastarmen 293 eingreifen können, die an einem Aufnahmekörper 297 beispielsweise der Abtrieb-Montageschnittstelle 42 vorgesehen sind. Die Rastarme 293 sind beispielsweise an einer Umfangswand 292, die eine Steckaufnahme 291 für den Steckvorsprung 92 begrenzt, vorgesehen. Die Rastarme 293 sind beispielsweise dadurch gebildet, dass sich entsprechende Schlitze in der Umfangswand 292 befinden. Durch unterschiedliche Längen von Rastarmen 293 wäre eine Drehwinkelkodierung ohne weiteres realisierbar. Selbstverständlich müssten dann zugeordnete Rastvertiefungen am Steckvorsprung 290 eine entsprechende Drehwinkelkodierung haben, das heißt beispielsweise unterschiedliche Längsabstände zum vorderen, freien Ende des Steckvorsprungs 90 aufweisen. Die Rastarme 293 können beispielsweise nach radial außen vom Innenumfang der Steckaufnahme 291 weg federn.

## Patentansprüche

1. Anhängekupplung für ein Kraftfahrzeug, insbesondere für einen Personenkraftwagen, mit einem Lagermodul (11; 111), das eine Lagerbasis (12; 112), die an einem an einem Heck des Kraftfahrzeugs zu befestigenden Träger (19; 119) angeordnet ist, und ein an der Lagerbasis (12; 112) beweglich gelagertes Lagerelement (13; 113) aufweist, an dem ein Kuppelträger mit einem Kuppelelement (31) zum Ankuppeln eines Anhängers oder Lastenträgers angeordnet ist, wobei das Lagermodul (11; 111) den Kuppelträger zwischen einer Betriebsstellung (B) , in welcher das Kuppelelement (31) zum Ankuppeln eines Anhängers oder eines Lastenträgers vor das Heck des Kraftfahrzeugs vorsteht, und einer Nichtgebrauchstellung (N) , in welcher das Kuppelelement (31) in Richtung des Hecks des Kraftfahrzeugs hin verstellt ist, insbesondere hinter einem Stoßfänger angeordnet ist, lagert, wobei ein Antrieb zur Betätigung einer Verriegelungseinrichtung (14) des Kuppelelements (31) zumindest in der Betriebstellung und/oder zur Verstellung des Kuppelelements (31) zwischen der Nichtgebrauchstellung (N) und der Betriebstellung vorgesehen ist, wobei das Lagermodul (11; 111) ein Basismodul für ein modulares Baukastensystem (10) bildet und das Lagerelement (13; 113) eine Kuppelträger-Montageschnittstelle (21) für den Kuppelträger, die zur wahlweisen Montage eines Kuppelträgers eines ersten Typs oder eines Kuppelträgers mindestens eines zweiten Typs ausgestaltet ist, der sich von dem Kuppelträger des ersten Typs in Bezug auf mindestens eine Eigenschaft, insbesondere seine Geometrie, unterscheidet, aufweist, und/oder die Lagerbasis (12; 112) mindestens eine Antrieb-Montageschnittstelle (22) zur wahlweisen Montage eines Antriebs eines ersten Typs oder eines Antriebs mindestens eines zweiten Typs, der sich in mindestens einer Eigenschaft von dem Antrieb des ersten Typs unterscheidet, aufweist, **dadurch gekennzeichnet, dass** mindestens eine Montageschnittstelle als eine Steck-Montageschnittstelle ausgestaltet ist, die eine Steckmontage der aneinander zu befestigenden Komponenten ermöglicht und zur Sicherung der Steckverbindung eine Halteklammer aufweist.

2. Anhängekupplung nach Anspruch 1, **dadurch gekennzeichnet, dass** die Kuppelträger-Montageschnittstelle (21) und/oder die Antrieb-Montageschnittstelle (22) eine Drehwinkelkodierung aufweisen, so dass der jeweilige Kuppelträger oder Antrieb nur in einer vorbestimmten Drehwinkelposition an der Montageschnittstelle montierbar ist.

3. Anhängekupplung nach Anspruch 2, **dadurch gekennzeichnet, dass** die Drehwinkelkodierung mindestens einen Kodiervorsprung und eine Kodieraufnahme umfasst, die in der vorbestimmten Drehwinkelposition ineinander passen, und/oder ein ein-eindeutiges Lochbild (23, 33) für eine Verschraubung des Kuppelträgers mit dem Lagerelement (13; 113) oder für eine Verschraubung des Antriebs mit der Lagerbasis (12; 112) umfasst und/oder Löcher mit unterschiedlichen Geometrien und/oder Durchmessern aufweist.

4. Anhängekupplung nach einem der vorhergehenden Ansprüche, **dadurch gekennzeichnet, dass** der Antrieb einen manuellen Antrieb, der von einem Bediener manuell betätigbar ist, insbesondere einen Schwenkarm, einen Drehknauf oder dergleichen zur Betätigung durch den Bediener, und/oder einen motorischen Antrieb zur insbesondere elektromotorischen Betätigung umfasst.

5. Anhängekupplung nach einem der vorhergehenden Ansprüche, **dadurch gekennzeichnet, dass** der Antrieb ein Fernbetätigungselement (50) , insbesondere einen Bowdenzug, umfasst, das an einem ersten Längsendbereich eine Montageschnittstelle zur Montage an der Antrieb-Montageschnittstelle (22) und an einem zweiten Längsendbereich eine Abtrieb-Montageschnittstelle (42) zur Montage an einem Abtrieb des Antriebs aufweist.

6. Anhängekupplung nach einem der vorhergehenden Ansprüche, **dadurch gekennzeichnet, dass** die Abtrieb-Montageschnittstelle (42) baugleich mit der Antrieb-Montageschnittstelle (22) des Lagermoduls (11; 111) ist.

7. Anhängekupplung nach einem der vorhergehenden Ansprüche, **dadurch gekennzeichnet, dass** die Steck-Montageschnittstelle eine Verriegelung aufweist, insbesondere eine nicht mehr zerstörungsfrei lösbare Verriegelung aufweist, welche die aneinander gesteckten Komponenten miteinander verriegelt.

8. Anhängekupplung nach einem der vorhergehenden Ansprüche, **dadurch gekennzeichnet, dass** mindestens eine Montageschnittstelle als eine Rast-Montageschnittstelle ausgestaltet ist, bei der ein Rastelement der einen zu verrastenden Komponente in eine Rastaufnahme der anderen zu verrastenden Komponente der Montageschnittstelle einrastet.

9. Anhängekupplung nach einem der vorhergehenden Ansprüche, **dadurch gekennzeichnet, dass** der Kuppelträger des ersten Typs eine geometrisch von dem Kuppelträger des mindestens einen zweiten Typs abweichende Geometrie und/oder mechanische Belastbarkeit aufweist und/oder ein Kuppelelement (31) mit anderen Funktionselementen und/oder anderer Geometrie trägt.

10. Anhängekupplung nach einem der vorhergehenden Ansprüche, **dadurch gekennzeichnet, dass** die Kuppelträger-Montageschnittstelle (21) und/oder die Antrieb-Montageschnittstelle (22) eine Montagekodierung aufweist, so dass nur mit dem Lagermodul (11; 111) kompatible Kuppelträger oder Antriebe an einer jeweiligen Montageschnittstelle des Lagermoduls (11; 111) montierbar sind.

11. Anhängekupplung nach einem der vorhergehenden Ansprüche, **dadurch gekennzeichnet, dass** das Lagermodul (11; 111) ein Lagermodul (11; 111) eines ersten Typs ist und das Baukastensystem (10) ein Lagermodul (11; 111) mindestens eines zweiten Typs umfasst, wobei das Lagermodul (111) des mindestens einen zweiten Typs und das Lagermodul (11) des ersten Typs eine identische oder baugleiche Kuppelträger-Montageschnittstelle (21) und/oder eine identische oder baugleiche Antrieb-Montageschnittstelle (22) aufweisen.

12. Anhängekupplung nach einem der vorhergehenden Ansprüche, **dadurch gekennzeichnet, dass** der Träger (19; 119) einen Träger (19) eines ersten Typs und einen Träger (119) eines zweiten Typs umfasst, wobei sich die Träger (19; 119) des ersten und des zweiten Typs in mindestens einer Eigenschaft, insbesondere ihrer Geometrie oder ihrer mechanischen Belastbarkeit unterscheiden.

13. Anhängekupplung nach einem der vorhergehenden Ansprüche, **dadurch gekennzeichnet, dass** der Träger (19; 119) zur Montage an einem Querträger eines Trägersystems (19; 119) der Anhängekupplung ausgestaltet ist, wobei das Baukastensystem (10) vorzugsweise einen Querträger eines ersten Typs und eines von dem Querträgers ersten Typs sich in mindestens einer Eigenschaft, insbesondere der mechanischen Belastbarkeit oder Geometrie, unterscheidenden Querträger eines zweiten Typs umfasst.

14. Anhängekupplung nach einem der vorhergehenden Ansprüche, **dadurch gekennzeichnet, dass** der Antrieb eine Sicherungsinrichtung (60) umfasst, die zwischen einen Abtrieb (44) eines Antriebsmoduls (41; 141; 241) und die Antrieb-Montageschnittstelle (22) geschaltet ist, wobei die Sicherungseinrichtung (60) eine Rückwirkung eines Betätigungskörpers (17) der Verriegelungseinrichtung (14) der Anhängekupplung in Richtung der Lösestellung blockiert und bei einer Betätigung des Abtriebs in Richtung der Lösestellung eine Verstellung des Antriebs der Verriegelungseinrichtung (14) in Richtung der Lösestellung freigibt.

## Claims

1. Trailer coupling for a motor vehicle, in particular for a car, with a bearing module (11; 111) which has a bearing base (12; 112) mounted on a member (19; 119) to be fastened to a rear of the motor vehicle, and a bearing element (13; 113) movably mounted on the bearing base (12; 112) and on which is mounted a coupling support with a coupling element (31) for coupling to a trailer or load carrier, wherein the bearing module (11; 111) supports the coupling support between an operating position (B), in which the coupling element (31) protrudes beyond the rear of the motor vehicle for coupling-on a trailer or a load carrier, and an inoperative position (N) in which the coupling element (31) is shifted towards the rear of the motor vehicle, in particular located behind a bumper, wherein a drive is provided for actuation of a locking device (14) of the coupling element (31) at least in the operating position and/or for shifting the coupling element (31) between the inoperative position (N) and the operating position, wherein the bearing module (11; 111) forms a base module for a modular system (10) and the bearing element (13; 113) has a coupling support mounting interface (21) for the coupling support, which is designed for optional mounting of a coupling support of a first type or a coupling support of at least one second type which differs from the coupling support of the first type in respect of at least one property, in particular its geometry, and the bearing base (12; 112) has at least one drive mounting interface (22) for optional mounting of a drive of a first type or a drive of at least one second type which differs from the drive of the first type in at least one property, **characterised in that** at least one mounting interface is in the form of a plug-in mounting interface, which facilitates plug-in mounting of the components to be fastened to one another and has a retaining clip for securing the plug connection.

2. Trailer coupling according to claim 1, **characterised in that** the coupling support mounting interface (21) and/or the drive mounting interface (22) have a rotation angle coding, so that the respective coupling support or drive may be mounted on the mounting interface only in a predetermined rotation angle position.

3. Trailer coupling according to claim 2, **characterised in that** the rotation angle coding includes at least one coding projection and one coding location, which fit into one another in the predetermined rotation angle position, and/or includes a distinct hole pattern (23, 33) for screwing together of the coupling support and the bearing element (13; 113) or for screwing together of the drive and the bearing base (12; 112), and/or holes of differing geometry and/or diameter.

4. Trailer coupling according to any of the preceding claims, **characterised in that** the drive comprises a manual drive, which may be operated manually by an operator, in particular a swivel arm, a turning knob or the like for actuation by the operator, and/or a powered drive, in particular for electric motor actuation.

5. Trailer coupling according to any of the preceding claims, **characterised in that** the drive includes a remote control element (50), in particular a control cable, which has at a first longitudinal end section a mounting interface for mounting on the drive mounting interface (22), and at a second longitudinal end section an output mounting interface (42) for mounting on an output of the drive.

6. Trailer coupling according to any of the preceding claims, **characterised in that** the output mounting interface (42) is of identical construction to the drive mounting interface (22) of the bearing module (11; 111).

7. Trailer coupling according to any of the preceding claims, **characterised in that**, wherein the plug-in mounting interface expediently has a locking facility, in particular a locking facility which can no longer be released non-destructively, which locks to one another the components plugged together.

8. Trailer coupling according to any of the preceding claims, **characterised in that** at least one mounting interface is designed as a latching mounting interface, in which a latching element of the one component to be latched engages in a latching location of the other component of the mounting interface to be latched.

9. Trailer coupling according to any of the preceding claims, **characterised in that** the coupling support of the first type has a geometry and/or mechanical load bearing capacity varying from the coupling support of the second type or types, and/or bears a coupling element (31) with different function elements and/or different geometry.

10. Trailer coupling according to any of the preceding claims, **characterised in that** the coupling support mounting interface (21) and/or the drive mounting interface (22) have or has a mounting coding, so that only coupling supports or drives compatible with the bearing module (11; 111) may be mounted on a particular mounting interface of the bearing module (11; 111).

11. Trailer coupling according to any of the preceding claims, **characterised in that** the bearing module (11; 111) is a bearing module (11; 111) of a first type and the modular system (10) includes a bearing module (11; 111) of at least one second type, wherein the bearing module (111) of the second type or types and the bearing module (11) of the first type have a coupling support mounting interface (21) which is identical or of identical construction and/or a drive mounting interface (22) which is identical or of identical construction.

12. Trailer coupling according to any of the preceding claims, **characterised in that** the member (19; 119) includes a member (19) of a first type and a member (119) of a second type, wherein the members (19; 119) of the first and of the second type differ in at least one property, in particular their geometry or their mechanical load bearing capacity.

13. Trailer coupling according to any of the preceding claims, **characterised in that** the member (19; 119) is designed for mounting on a cross-member of a member system (19; 119) of the trailer coupling, wherein the modular system (10) preferably includes a cross-member of a first type, and a cross-member of a second type differing from the cross-member of the first type in at least one property, in particular mechanical load bearing capacity or geometry.

14. Trailer coupling according to any of the preceding claims, **characterised in that** the drive includes a securing device (60), which is connected between an output (44) of a drive module (41; 141; 241) and the drive mounting interface (22), wherein the securing device (60) blocks a reaction of an actuating body (17) of the locking device (14) of the trailer coupling in the direction of the release position and, on actuation of the output in the direction of the release position, allows a shifting of the drive of the locking device (14) in the direction of the release position.

## Revendications

1. Attelage pour un véhicule automobile, en particulier pour un véhicule de tourisme, avec un module de palier (11 ; 111) qui présente une base de palier (12 ; 112) qui est agencée au niveau d'un support (19 ; 119) à fixer à une partie arrière du véhicule automobile, et un élément de palier (13 ; 113) logé de manière mobile au niveau de la base de palier (12 ; 112), au niveau duquel un support de couplage avec un élément de couplage (31) est agencé pour le couplage d'une remorque ou d'un support de charge, dans lequel le module de palier (11; 111) loge le support de couplage entre une position de fonctionnement (B) dans laquelle l'élément de couplage (31) dépasse pour le couplage d'une remorque ou d'un support de charge de la partie arrière du véhicule automobile, et une position de non-utilisation (N), dans laquelle l'élément de couplage (31) est réglé en direction de la partie arrière du véhicule automobile, en particulier derrière un pare-chocs, dans lequel un entraînement est prévu pour l'actionnement d'un dispositif de verrouillage (14) de l'élément de couplage (31) au moins dans la position de fonctionnement et/ou pour le réglage de l'élément de couplage (31) entre la position de non-utilisation (N) et la position de fonctionnement, dans lequel le module de palier (11 ; 111) forme un module de base pour un système (10) modulaire et l'élément de palier (13 ; 113) présente une interface de montage de support de couplage (21) pour le support de couplage qui est configurée pour le montage au choix d'un support de couplage d'un premier type ou d'un support de couplage au moins d'un second type qui se distingue du support de couplage du premier type en ce qui concerne au moins une propriété, en particulier sa géométrie, et/ou la base de palier (12 ; 112) présente au moins une interface de montage d'entraînement (22) pour le montage au choix d'un entraînement d'un premier type ou d'un entraînement au moins d'un second type, qui se distingue dans au moins une propriété de l'entraînement du premier type, **caractérisé en ce qu'**au moins une interface de montage est configurée en tant qu'interface de montage d'enfichage qui permet un montage d'enfichage des composants à fixer les uns aux autres et présente pour la fixation de la liaison d'enfichage un étrier de retenue.

2. Attelage selon la revendication 1, **caractérisé en ce que** l'interface de montage de support de couplage (21) et/ou l'interface de montage d'entraînement (22) présentent un codage d'angle de rotation de sorte que le support de couplage concerné ou l'entraînement puisse être monté seulement dans une position d'angle de rotation prédéterminée au niveau de l'interface de montage.

3. Attelage selon la revendication 2, **caractérisé en ce que** le codage d'angle de rotation comporte au moins une saillie de codage et un logement de codage qui passent l'un dans l'autre dans la position d'angle de rotation prédéterminée, et/ou comporte un gabarit de trous (23, 33) biunivoque pour un vissage du support de couplage avec l'élément de palier (13 ; 113) ou pour un vissage de l'entraînement avec la base de palier (12 ; 112) et/ou présente des trous avec différentes géométries et/ou diamètres.

4. Attelage selon l'une des revendications précédentes, **caractérisé en ce que** l'entraînement comporte un entraînement manuel qui est actionnable manuellement par un utilisateur, en particulier un bras de pivotement, un bouton rotatif ou similaire pour l'actionnement par l'utilisateur, et/ou un entraînement motorisé pour l'actionnement en particulier électromotorisé.

5. Attelage selon l'une des revendications précédentes, **caractérisé en ce que** l'entraînement comporte un élément d'actionnement distant (50), en particulier un câble Bowden qui présente au niveau d'une première zone d'extrémité longitudinale une interface de montage pour le montage au niveau de l'interface de montage d'entraînement (22) et au niveau d'une seconde zone d'extrémité longitudinale une interface de montage de sortie (42) pour le montage au niveau d'une sortie de l'entraînement.

6. Attelage selon l'une des revendications précédentes, **caractérisé en ce que** l'interface de montage de sortie (42) est de construction identique à l'interface de montage d'entraînement (22) du module de palier (11 ; 111).

7. Attelage selon l'une des revendications précédentes, **caractérisé en ce que** l'interface de montage d'enfichage présente un verrouillage, en particulier présente un verrouillage plus amovible sans destruction qui verrouille les composants enfichés les uns sur les autres entre eux.

8. Attelage selon l'une des revendications précédentes, **caractérisé en ce qu'**au moins une interface de montage est configurée en tant qu'une interface de montage d'encliquetage, pour laquelle un élément d'encliquetage d'un composant à encliqueter s'encliquète dans un logement d'encliquetage de l'autre composant à encliqueter de l'interface de montage.

9. Attelage selon l'une des revendications précédentes, **caractérisé en ce que** le support du couplage du premier type présente une géométrie et/ou une résistance mécanique divergeant géométriquement du support de couplage d'au moins un second type et/ou porte un élément de couplage (31) avec d'autres éléments fonctionnels et/ou une autre géométrie.

10. Attelage selon l'une des revendications précédentes, **caractérisé en ce que** l'interface de montage de support de couplage (21) et/ou l'interface de montage d'entraînement (22) présente un codage de montage de sorte que seuls des supports de couplage compatibles avec le module de palier (11 ; 111) ou des entraînements peuvent être montés au niveau d'une interface de montage respective du module de palier (11 ; 111).

11. Attelage selon l'une des revendications précédentes, **caractérisé en ce que** le module de palier (11 ; 111) est un module de palier (11 ; 111) d'un premier type et le système modulaire (10) comporte un module de palier (11 ; 111) au moins d'un second type, dans lequel le module de palier (111) d'au moins un second type et le module de palier (11) du premier type présentent une interface de montage de support de couplage (21) identique ou de construction identique et/ou une interface de montage d'entraînement (22) identique ou de construction identique.

12. Attelage selon l'une des revendications précédentes, **caractérisé en ce que** le support (19 ; 119) comporte un support (19) d'un premier type et un support (119) d'un second type, dans lequel les supports (19 ; 119) du premier et du second type se distinguent dans au moins une propriété, en particulier leur géométrie ou leur résistance mécanique.

13. Attelage selon l'une des revendications précédentes, **caractérisé en ce que** le support (19 ; 119) est configuré pour le montage au niveau d'une traverse d'un système de support (19 ; 119) de l'attelage, dans lequel le système modulaire (10) comporte de préférence une traverse d'un premier type et une traverse se distinguant de la traverse du premier type dans au moins une propriété, en particulier la résistance mécanique ou la géométrie d'un second type.

14. Attelage selon l'une des revendications précédentes, **caractérisé en ce que** l'entraînement comporte un dispositif de fixation (60) qui est monté entre une sortie (44) d'un module d'entraînement (41 ; 141 ; 241) et l'interface de montage d'entraînement (22), dans lequel le dispositif de fixation (60) bloque une rétroaction d'un corps d'actionnement (17) du dispositif de verrouillage (14) de l'attelage en direction de la position de détachement et libère en cas d'un actionnement de la sortie en direction de la position de détachement un réglage de l'entraînement du dispositif de verrouillage (14) en direction de la position de détachement.
